# EUROPÄISCHE PATENTSCHRIFT

(11) **EP 1 617 180 B1**
(45) Veröffentlichungstag und Bekanntmachung des Hinweises auf die Patenterteilung: **19.09.2007**
(21) Anmeldenummer: 04016309.9
(22) Anmeldetag: 12.07.2004
(51) Int. Cl.: G01D 5/16

(54) **Positionsgeber sowie Verfahren zur Bestimmung einer Position einer drehbaren Welle**
Position sensor and method to determine the position of a rotating shaft
Détecteur de position et méthode pour déterminer la position d'un arbre rotatif

(43) Veröffentlichungstag der Anmeldung: 18.01.2006
(73) Patentinhaber: Feig Electronic GmbH, 35781 Weilburg-Waldhausen (DE)
(72) Erfinder: Heinze, Frieder Dipl.-Ing., 35625 Hüttenberg (DE); Schäfer, Dirk Dipl.-Ing., 35789 Weilmünster (DE)
(74) Vertreter: Knefel, Cordula

(56) Entgegenhaltungen:
- EP-A- 0 550 794
- EP-A- 0 995 974
- DE-A1- 10 250 319
- US-A1- 2001 056 333
- US-B1- 6 578 417

## Beschreibung

Die Erfindung betrifft einen Positionsgeber sowie ein Verfahren zur Bestimmung einer Position einer drehbaren Welle.

Zum Stand der Technik (DE 198 49 108 C2, EP 0 995 974 A1) gehört ein Drehgeber mit einer Geberwelle, die eine erste Codierscheibe für eine Singleturnmessung und eine zweite Codierscheibe für eine Multiturnmessung trägt, wobei der Multiturncodierscheibe eine Auswerteelektronik zugeordnet ist, welche die von Sensoren ausgelösten Signale einem Logikmodul und einem nachgeschalteten Zählermodul zuführt, das die Signale in Zählerimpulse wandelt.

Dieser zum Stand der Technik gehörende Drehgeber hat den Nachteil, dass für die Singleturnmessung und die Multiturnmessung jeweils eine Codierscheibe mit einer zugehörigen Sensorik und Elektronik erforderlich ist. Darüber hinaus weist dieser zum Stand der Technik gehörende Drehgeber den Nachteil auf, dass die Sensoren zum Zählen der vollen Umdrehungen gleichzeitig die Funktion einer Weckvorrichtung für das Logikmodul übernehmen. Dies hat den Nachteil, dass die Weckvorrichtung eine Filterung benötigt.

Dieser zum Stand der Technik gehörende Drehgeber weist darüber hinaus den Nachteil auf, dass die Geberwelle in ein Gehäuse geführt ist, in dem auch die Codierscheibe mit der zugehörigen Sensorik und Elektronik angeordnet ist. Diese Ausführungsform hat den Nachteil, dass die Geberwelle zum Einen in dem Gehäuse gelagert sein muss, das heißt, es ist eine aufwändige Lagerung erforderlich. Zum Anderen muss eine exakte Justierung vorgenommen werden, und das Gehäuse ist unter Umständen nicht dicht gegenüber Umwelteinflüssen.

Weiterhin gehört zum Stand der Technik (EP 0 550 794) ein Drehgeber zur Absolutwert-Positionserfassung, bei dem die Vorrichtung zur Erfassung ganzer Umdrehungen ein mechanisch schließendes Schaltelement und ein mit der Geberwelle verbundenes, rotierbares Betätigungsteil für das Schaltelement aufweist. Diese Ausführungsform ist relativ aufwändig im Aufbau. Darüber hinaus ist gemäß diesem Stand der Technik die Geberwelle auch wieder in das Gehäuse geführt, in dem die Codierscheiben angeordnet sind. Auch bei diesem Stand der Technik sind zwei Erfassungsvorrichtungen vorgesehen, nämlich zum Einen eine Winkelcodierscheibe und zum Anderen ein magnetischer Ring mit dem Ring gegenüberliegenden Reed-Schaltern. Damit ist auch diese Ausführungsform relativ aufwändig im Aufbau.

Darüber hinaus gehört zum Stand der Technik (DE 102 50 319 A1) eine Einrichtung zur Erfassung der Rotation einer Welle und ein GMR-Schichtsystem. Die in diesem Stand der Technik gehörende Einrichtung ist ausschließlich als Singleturneinheit ausgebildet und damit nicht in der Lage, Mehrfachumdrehungen zu erfassen.

Das der Erfindung zugrunde liegende technische Problem besteht darin, einen Positionsgeber zur Bestimmung einer Position einer drehbaren Welle anzugeben, der einen einfachen und kostengünstigen Aufbau aufweist. Darüber hinaus soll ein Positionsgeber angegeben werden, der einfach zu montieren ist sowie in Bezug auf Umwelteinflüsse widerstandsfähig ist. Weiterhin soll ein Verfahren zur Bestimmung einer Position einer drehbaren Welle angegeben werden, welches mit einem kostengünstig aufgebauten Positionsgeber durchführbar ist.

Dieses technische Problem wird mit einem Positionsgeber mit den Merkmalen gemäß Anspruch 1 sowie einem Verfahren mit den Merkmalen gemäß Anspruch 24 gelöst.

Dadurch, dass der erfindungsgemäße Positionsgeber zur Bestimmung einer Position einer drehbaren Welle mit einer AMR-Sensoreinheit oder einer GMR-Sensoreinheit aufgebaut ist, wobei die Sensoreinheit als zweigeteilter AMR-Sensor oder zweigeteilter GMR-Sensor ausgebildet ist oder die Sensoreinheit zwei AMR-Sensoren oder zwei GMR-Sensoren aufweist, bei dem für die Positionserfassung lediglich ein auf einer zu überwachenden Welle angeordneter Magnet vorgesehen ist, und dadurch, dass der Positionsgeber als Singleturn- und gleichzeitig als Multiturneinheit verwendbar ist, und dass die Positionsinformationen ausschließlich aus den Signalen der AMR-Sensoreinheit oder der GMR-Sensoreinheit abgeleitet werden, und dass ein lediglich während des Messzeiten aktivierter Mikrocontroller vorgesehen ist, und dass eine von dem Magneten gesteuerte Weckvorrichtung zum Aufwecken des Mikrocontrollers vorgesehen ist, und dadurch, dass die Weckvorrichtung wenigstens einen vom Magnetfeld des Magneten ausgelösten Signalgeber aufweist, weist der erfindungsgemäße Positionsgeber einen sehr einfachen und kostengünstigen Aufbau auf.

Gemäß einer besonders bevorzugten Ausführungsform wird eine AMR-Sensoreinheit (anisotroper Magnetowiderstand (anisotropic magnetoresistance)) verwendet. Es ist jedoch auch möglich, GMR-Sensoreinheiten (Riesenmagnetowiderstand (giant magnetoresistance)) in dem Positionsgeber vorzusehen. Die folgenden Ausführungen beziehen sich der Einfachheit halber auf AMR-Sensoreinheiten. In den meisten Fällen sind die Ausführungen jedoch gleichermaßen auf eine GMR-Sensoreinheit übertragbar.

Gemäß einer weiteren besonders bevorzugten Ausführungsform ist der Positionsgeber derart aufgebaut, dass die AMR-Sensoreinheit in einem geschlossenen Gehäuse angeordnet ist, und dass der Sensoreinheit gegenüberliegend außerhalb des Gehäuses der Magnet in oder an der zu überwachenden Welle angeordnet ist.

Hierdurch ist es möglich, eine berührungslose Erfassung der Drehbewegungen mit dem AMR-Sensor durchzuführen, was den Vorteil hat, dass eine universelle Montage möglich ist, weil keine exakte Justierung notwendig ist. Das Gehäuse ist darüber hinaus dicht gegenüber Umwelteinflüssen. Es treten keine mechanischen Verschleißteile am Drehgeber auf, und die Ausführungsform ist kostengünstig, weil keine aufwändige Lagerung erforderlich ist.

Besonders vorteilhaft ist der erfindungsgemäße Positionsgeber als Drehgeber für Tore einsetzbar. Es sind jedoch auch andere Einsatzgebiete denkbar.

Gemäß einer bevorzugten Ausführungsform weist der Positionsgeber einen Magneten auf, der als diametral magnetisierter Magnet ausgebildet ist. Dieser Magnet ist der AMR-Sensoreinheit zugeordnet, das heißt vorteilhaft gegenüberliegend angeordnet. Zusätzlich ist ein Mikrocontroller vorgesehen. Der Mikrocontroller und die Sensoreinheit sind zur Auswertung des Magnetfeldes des Magneten vorgesehen.

Darüber hinaus weist die Weckvorrichtung wenigstens einen vom Magnetfeld des Magneten ausgelösten Signalgeber auf. Der Signalgeber kann beispielsweise als Reed-Schalter oder Hall-Element ausgebildet sein. Vorteilhaft sind ein bis drei Reed-Schalter oder Hall-Elemente vorgesehen. Da der Stromverbrauch von Hall-Elementen relativ hoch ist, bietet sich die Verwendung von Hall-Elementen für eine Singleturnlösung an, bei der permanent mit einer externen Spannung gearbeitet wird.

Gemäß einer weiteren vorteilhaften Ausbildung ist wenigstens eine Batterie oder wenigstens ein Akkumulator zur Versorgung des Mikrocontrollers und der Weckvorrichtung vorgesehen.

Die wenigstens eine Batterie oder der wenigstens eine Akkumulator können im Messmodus den Mikrocontroller und wenigstens zeitweise die AMR-Sensoreinheit, die Komparatoren und die Weckvorrichtung mit Spannung versorgen.

Gemäß einer weiteren vorteilhaften Ausführungsform ist die Weckvorrichtung als eine über hochohmige Widerstände von der Batterie gespeiste Weckvorrichtung ausgebildet. Hierdurch weist der Positionsgeber eine niedrige Leistungsaufnahme im Batteriebetrieb auf, weil im Wesentlichen nur die hochohmige Weckvorrichtung von der Batterie gespeist wird und der RAM-Inhalt des Mikrocontrollers gepuffert wird.

Der erfindungsgemäße Positionsgeber weist wenigstens einen Schwellwertschalter zur Digitalisierung der Sinus- und Kosinus-Signale der AMR-Sensoreinheit auf.

Der Schwellwertschalter kann beispielsweise als Komparator ausgebildet sein.

Um eine möglichst lange Stromversorgung durch die Batterie oder den Akkumulator zu gewährleisten, ist der Mikrocontroller vorteilhaft als ein Stromspareigenschaften aufweisender Mikrocontroller ausgebildet. Zusätzlich ist vorteilhaft noch eine externe Spannungsversorgung vorgesehen.

Darüber hinaus ist vorteilhaft ein Parameterspeicher vorgesehen, damit verschiedene Parameter bei einem eventuellen Stromausfall abgespeichert sind und beispielsweise Torpositionen (Anfangs- und Endposition) nicht wieder neu erfasst werden müssen.

Weiterhin ist vorteilhaft ein Temperatursensor vorgesehen, um zu gewährleisten, dass insbesondere die Elektronikteile nicht überhitzt werden.

Gemäß einer besonders bevorzugten Ausführungsform ist die AMR-Sensoreinheit in einem geschlossenen Gehäuse angeordnet, und der Sensoreinheit gegenüberliegend ist außerhalb des Gehäuses der Magnet in oder an der zu überwachenden Welle angeordnet. Hierdurch wird eine Trennung der Geberwelle von der Sensoreinheit vorgenommen, so dass die Sensoreinheit gekapselt und gegen Umwelteinflüsse geschützt in dem Gehäuse angeordnet ist. Eine Durchführung der Geberwelle in das Gehäuse ist gemäß dieser Ausführungsform nicht vorgesehen.

Vorteilhaft ist der Magnet in einem Magnetträger angeordnet, der das Ende der zu überwachenden Welle aufnimmt. Der Magnetträger kann beispielsweise auf der zu überwachenden Welle aufgesteckt und dort fixiert werden. Diese Ausführungsform hat den Vorteil, dass der erfindungsgemäße Positionsgeber in einfacher Art und Weise auch nachträglich montierbar ist.

Gemäß einer weiteren vorteilhaften Ausführungsform weist das Gehäuse im Bereich der AMR-Sensoreinheit eine den Magnetträger wenigstens teilweise aufnehmende Ausnehmung auf. Diese Ausnehmung hat den Vorteil, dass die Anordnung der Geberwelle mit dem Magneten oder dem Magnetträger relativ eindeutig festgelegt wird, indem der auf der Geberwelle angeordnete Magnet oder Magnetträger in der Ausnehmung angeordnet wird. Dadurch, dass die Sensoreinheit im Bereich der Ausnehmung angeordnet ist, wird der Magnet, wenn er ebenfalls in der Ausnehmung angeordnet wird, automatisch der Sensoreinheit gegenüberliegend angeordnet.

Vorteilhaft ist der Magnetträger kontaktlos in der Ausnehmung angeordnet. Diese Ausführungsform hat den Vorteil, dass die Montage sehr einfach ist, da lediglich darauf zu achten ist, dass der Magnetträger in der Ausnehmung angeordnet wird. Eine exakte Ausrichtung der Geberwelle mit dem Magnetträger ist nicht erforderlich.

Gemäß einer weiteren vorteilhaften Ausführungsform ist der die Geberwelle aufnehmende Magnetträger mittels wenigstens eines Kugellagers in der Ausnehmung gelagert. Das Kugellager ist in diesem Fall sehr einfach ausgeführt, da die Anforderungen an die Lagerung nicht sehr hoch sind.

Vorteilhaft ist der Magnetträger als ein auf der zu überwachenden Welle adaptierbarer Magnetträger ausgebildet. Dadurch, dass der Magnetträger auf der Welle in einfacher Art und Weise angeordnet werden kann, ist ein Ausrüsten oder Nachrüsten einer Geberwelle mit dem erfindungsgemäßen Positionsgeber in sehr einfacher Art und Weise möglich.

Vorteilhaft wird ein sehr starker Magnet, beispielsweise mit einem Magnetfeld von wenigstens fünfzig Millitesla (mT) verwendet. Hierdurch weist der erfindungsgemäße Positionsgeber einen relativ großen Toleranzbereich im Zusammenspiel zwischen Magnet und Sensor auf. Der AMR-Sensor wird hierbei in Sättigung betrieben, so dass eine sehr geringe Beeinflussung durch Fremdfelder auftritt.

Das Gehäuse besteht vorteilhaft aus Kunststoff. Hierdurch kann das Gehäuse sehr preisgünstig hergestellt werden. Es ist auch möglich, ein anderes nicht ferromagnetisches Material zu verwenden.

Je nach Anwendungsgebiet ist es vorteilhaft, wenigstens ein Schirmblech gegen magnetische Störfelder in dem Gehäuse anzuordnen. Hierdurch kann ein magnetisches Störfeld innerhalb des Gehäuses abgeschirmt werden. An das Schirmblech sind keine Anforderungen bezüglich der Umwelteinflüsse gestellt, da es im Gehäuse gekapselt ist. Durch das Schirmblech kann der ohnehin geringe Einfluss eines Störfeldes auch bei hoher Auflösung nahezu vollständig vernachlässigt werden.

Die erfindungsgemäße Vorrichtung hat den Vorteil, dass das Gehäuse, wenn es aus Kunststoff ausgebildet ist, preiswert und in komplexen Formen herstellbar ist. Es ist korrosionsbeständig, weist ein geringes Gewicht auf sowie eine hohe Dichtigkeit. Darüber hinaus weist es den Vorteil auf, dass ein schlechter Wärmeübergang beispielsweise von einem heißen Antrieb zur Elektronik vorhanden ist.

An den Magnetträger werden keine Dichtigkeitsanforderungen gestellt. Das bedeutet, dass die Vorrichtung im Extremfall auch unter Wasser funktionieren würde.

Ist ein Kugellager zur Lagerung des Magnetträgers in der Ausnehmung des Gehäuses vorgesehen, kann ein günstiges Kugellager verwendet werden, da keine Präzisionsanforderung an das Kugellager gestellt wird.

Weiterer Vorteil des erfindungsgemäßen Positionsgebers ist, dass durch die Kapselung der Sensoreinheit kein Einfluss von Staub, Feuchtigkeit, Fett, Öl und dergleichen vorhanden ist.

Besonders vorteilhaft wirkt sich aus, dass keine mechanische Verbindung zwischen der zu überwachenden Welle und dem Sensor im Gehäuseinneren vorgesehen ist. Hierdurch wird eine Übertragung von Vibrationen, Schock und Schwingungen der Welle auf den Sensor vermieden. Darüber hinaus erhält man eine gute thermische Isolation. Gemäß dem Stand der Technik ist eine metallische Verbindung ins Gehäuseinnere vorgesehen, die eine gute Wärmeleitung vom heißen Antrieb zur Elektronik mit sich bringt. Dadurch heizt sich die Elektronik und eine eventuell vorgesehene Batterie unnötig auf.

Die berührungslose Erfassung der Umdrehungen hat weiterhin den Vorteil, dass hohe Drehzahlen erfassbar sind, und dass eine hohe mechanische Lebensdauer auch bei rauem Umfeld erzielt wird.

Weiterer Vorteil der Erfindung ist, dass bei Vorsehen eines Gehäusedeckels dieser sich auch "im Feld" öffnen lässt, da die Elektronik unempfindlich gegen Verschmutzung, Feuchte und so weiter ist. Hierdurch erhält man den Vorteil, dass Teile der Sensoreinheit oder beispielsweise eine Batterie ohne mechanischen Zusatzaufwand einfach austauschbar ist. Weiterhin können Klemmen steckbar im Gehäuseinneren ausgeführt werden, so dass keine teuren und abgedichteten Spezialstecker verwendet werden müssen.

Der erfindungsgemäße Positionsgeber wird vorzugsweise zur Erfassung von Torpositionen verwendet. Es kann sich hierbei bei der Ausführung der Welle um die direkte Motorwelle (bis 6000 Umdrehungen pro Minute), um die Getriebeabgangswelle oder die Torwelle oder um eine speziell zur Positionserfassung am Antrieb oder der Tormechanik angebrachte Sonderwelle handeln.

Gemäß dem erfindungsgemäßen Verfahren zur Bestimmung einer Position einer drehbaren Welle mit dem erfindungsgemäßen Positionsgeber wird mit einem diametral magnetisierten Magneten in einem zweigeteilten AMR-Sensor oder in zwei AMR-Sensoren Signale erzeugt derart, dass als Ausgangssignale der AMR-Sensoreinheit Sinus- und Kosinus-Signale erhalten werden, dass die Sinus- und Kosinus-Signale digitalisiert werden und dass diese Signale von einem Mikrocontroller bezüglich der Erfassung und Auswertung des Drehwinkels zur Erfassung, Filterung und Auswertung der Anzahl der Umdrehungen zur Erkennung der Drehrichtung und/oder der Datenübertragung des Drehwinkels und der Anzahl der Umdrehungen an eine übergeordnete Steuerung verarbeitet werden.

Die AMR-Sensoren oder der zweigeteilte AMR-Sensor geben Spannungen aus, die über den gesamten Drehwinkel des Magneten gesehen jeweils zweimal eine Sinus- beziehungsweise Kosinusform durchlaufen. Die Schwellwertschalter, beispielsweise die Komparatoren werten die Spannungssignale digital aus. Sie schalten jeweils bei den Nulldurchgängen der Spannungen.

Durch den mit der Geberwelle sich drehenden Magneten wird auch der wenigstens eine Signalschalter der Weckvorrichtung für den Mikrocontroller betätigt.

Gemäß einer vorteilhaften Ausführungsform der Erfindung wechselt der Mikrocontroller nach Auswertung der Signale selbsttätig in einen Sleep-Modus.

Nach dem Wecken des Mikrocontrollers aktiviert dieser vorteilhaft die AMR-Sensoreinheit und den wenigstens einen Schwellwertgeber.

Das erfindungsgemäße Verfahren zeichnet sich dadurch aus, dass die Positionsinformationen ausschließlich aus den Signalen der AMR-Sensoreinheit abgeleitet werden. Vorteilhaft wird die Anzahl der Umdrehungen anhand der Nulldurchgänge des Sinus- und des Kosinus-Signales der AMR-Sensor-einheit ermittelt.

Der erfindungsgemäße Positionsgeber und das erfindungsgemäße Verfahren haben den Vorteil, dass durch die AMR-Sensoreinheit und den diametral magnetisierten Magneten die Sensoreinheit 180°-Umdrehungen des Magneten auflöst. Hierdurch kann eine Analog/Digital-Auflösung des Mikrocontrollers für 180° genutzt werden. Es werden zum Beispiel 12 Bit für 180° anstelle 360° bei üblichen Codierscheiben genutzt.

Da die Umdrehungen ohnehin gezählt werden müssen, ist kein Zusatzaufwand für die 180°-Sektorenerkennung vorhanden.

Die Auflösung für eine volle Umdrehung, das heißt für 360°, beträgt somit zum Beispiel 13 Bit, nämlich die Auflösung des ADC (zum Beispiel 12 Bit) plus 1 Bit.

Durch die AMR-Sensortechnologie werden höhere Toleranzen im Abstand zwischen Magnet und Sensor zugelassen. Hierdurch wird eine lagerlose und berührungslose Ausführungsform für einen Torbauer praktikabel.

Durch die Verwendung einer magnetoresistiven Sensoreinheit, beispielsweise anstelle eines Hall-Sensors, wird die Richtung des Magnetfeldes gemessen anstelle der Feldstärke. Hierdurch erhält man den Vorteil, dass der Einfluss von Fremdfeldern geringer ist, und dass größere Abstände ohne Einfluss von Störfeldern auswertbar sind, zum Beispiel im Millimeterbereich gegenüber 1/10-Millimeterbereich.

Durch die mechanische Trennung zwischen Sensor und Magnet ist ein hoher Toleranzbereich auf einfache Art und Weise möglich.

Die magnetoresistive Sensoreinheit hat gegenüber optischen Scheiben den Vorteil, dass eine mechanische Trennung zwischen der Sensorelektronik und dem Positionsgeber möglich ist. Hierdurch erhält man die Möglichkeit, das Gehäuse abzudichten, und man erhält durch die gemäß der Erfindung lagerlose Variante des Magnetträgers in der Ausnehmung des Gehäuses eine preiswerte Mechanik.

Die Sensoreinheit, die gekapselt in dem Gehäuse angeordnet ist, ist gegen Umwelteinflüsse abgeschirmt, beispielsweise gegen Kondensation, gegen Staub, Schock und Vibration und so weiter, vor allen Dingen auch im Betrieb.

Dadurch, dass der erfindungsgemäße Positionsgeber einen geringen Stromverbrauch aufweist, sind die Multiturnsignale aus dem Singleturnsensor ableitbar. Mit optischen Systemen ist aufgrund des hohen Stromverbrauches eine batteriegespeiste Erfassung nur über sehr kurze Zeiträume beziehungsweise nur durch sehr große Batterien realisierbar.

Gemäß dem erfindungsgemäßen Verfahren wird das Magnetfeld des auf der zu überwachenden Welle angebrachten Magneten durch den zweigeteilten AMR-Sensor oder durch die zwei AMR-Sensoren, die Sinus- und Kosinus-Signale erzeugen, und durch zwei Reed-Schaltkontakte ausgewertet. Die Positionsinformation wird hierbei ausschließlich aus den Signalen des AMR-Sensors abgeleitet. Die auf eine Analogwerterfassung basierende 180°-Überwachung ist nur aktiv, so lange das Gesamtgerät durch eine externe Spannung versorgt wird. Die Anzahl der Umdrehungen wird anhand der Nulldurchgänge des Sinus- und Kosinus-Signales ermittelt. Wird die externe Versorgungsspannung entfernt, so wird durch den Mikrocontroller eine Pufferbatterie aktiviert. Diese versorgt den Mikrocontroller und eine Aufweckschaltung, bestehend vorteilhaft aus zwei Reed-Schaltern, die über hochohmige Widerstände von der Batterie gespeist werden. Dreht sich der Magnet, so werden in bestimmten Stellungen des Magneten die Reed-Schalter aktiviert beziehungsweise deaktiviert, beispielsweise jeweils circa 15° vor und hinter den Nulldurchgängen von Sinus beziehungsweise Kosinus. Jede Schaltflanke weckt den permanent an Spannung liegenden Mikrocontroller auf. Dieser aktiviert nun wiederum für eine kurze Zeit, zum Beispiel 100 Mikrosekunden, den AMR-Sensor und eine zweigeteilte Komparatorstufe. Die Komparatorausgänge kennzeichnen wiederum die Position des Magneten zum Sensor in 45° Schritten. Anhand des sicheren Schaltzustandes kann nun der Zählerstand ermittelt werden. Zusätzlich kann über den zeitlichen Ablauf der Signale, das heißt über die Vorgeschichte und den Schaltzustand der Reed-Kontakte eine Plausibilitätsprüfung erfolgen. Dies hat den Vorteil, dass man nicht auf die hochohmigen prellenden Signale des Reed-Schalters angewiesen ist.

Die Spannungsversorgung der einzelnen Baugruppen kann dreigeteilt erfolgen:
1. Externe Versorgung:
   Hier werden alle Baugruppen aktiviert. Der Mikrocontroller bedient die Schnittstelle und den integrierten ADC inklusive der dazugehörigen Verstärker. Hierbei ist eine Stromaufnahme von circa 100 Milliampere vorhanden.
2. Batteriespeisung im Sleep-Modus:
   Es werden nur der schlafende Mikrocontroller und die Reed-Schalter versorgt. Hierbei ist eine Stromaufnahme von circa drei Mikroampere vorhanden.
3. Batteriespeisung im Messmodus:
   Es wird der laufende Mikrocontroller gespeist, zeitweise die AMR-Sensoren und die Komparatoren (circa 100 Mikrosekunden alle zwei Millisekunden) sowie die Reed-Schalter.

Weitere Merkmale und Vorteile der Erfindung ergeben sich anhand der zugehörigen Zeichnung, in der mehrere Ausführungsbeispiele eines erfindungsgemäßen Positionsgebers nur beispielhaft dargestellt sind. In der Zeichnung zeigen:
- Fig. 1: einen erfindungsgemäßen Positionsgeber im Längsschnitt;
- Fig. 2: eine Darstellung des Toleranzbereiches eines Positionsgebers im Längsschnitt;
- Fig. 3: ein geändertes Ausführungsbeispiel;
- Fig. 4: ein Blockschaltbild der Elektronik des Positionsgebers mit Magnet;
- Fig. 5: ein Signalablaufdiagramm der Sensorik.

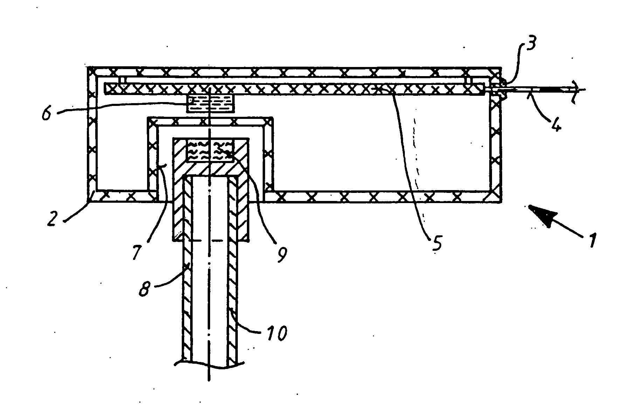

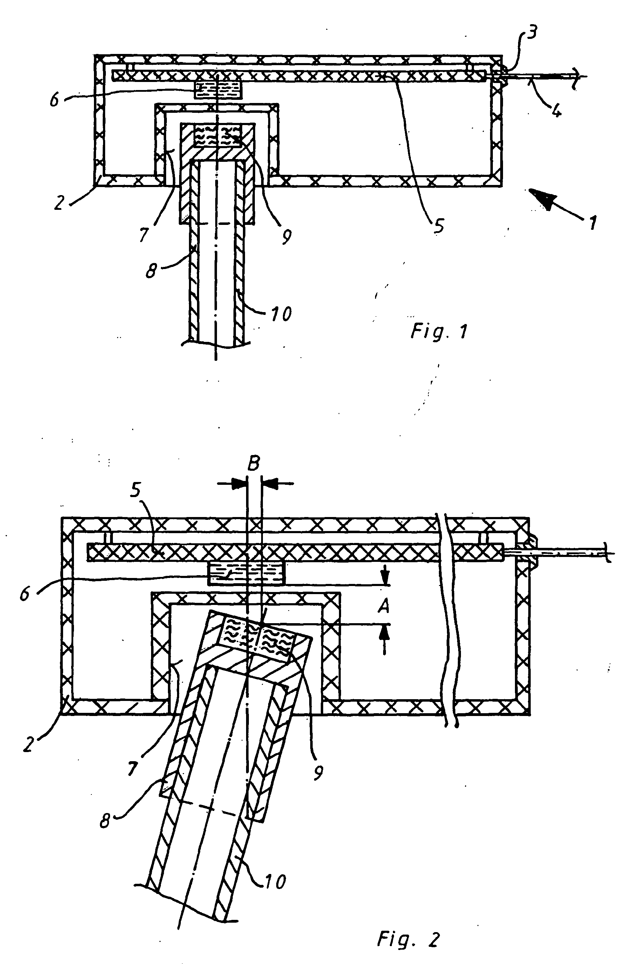

Fig. 1 zeigt einen Positionsgeber (1) mit einem Gehäuse (2), welches vollständig geschlossen ist und aus Kunststoff besteht. Es ist lediglich eine abgedichtete Leitungseinführung (3) für ein Kabel (4) vorgesehen. In dem Gehäuse (2) ist eine Platine (5) angeordnet, die eine AMR-Sensoreinheit (6) trägt. In dem Gehäuse (2) ist eine Ausnehmung (7) vorgesehen, in der ein Magnetträger (8) mit einem in dem Magnetträger (8) angeordneten Magneten (9) kontaktlos gelagert ist. Der Magnetträger (8) ist auf eine Welle (10), deren Anzahl von Umdrehungen erfasst werden soll, angeordnet.

Der Magnetträger (8) ist berührungslos in der Ausnehmung (7) angeordnet.

Durch die berührungslose Anordnung ist ein relativ großer Toleranzbereich im Zusammenspiel zwischen Magnet (9) und Sensoreinheit (6) vorhanden.

Wie in Fig. 2 zu erkennen ist, ist bei der kontaktlosen Lagerung des Magnetträgers (8) in der Ausnehmung (7) eine Toleranz möglich. Beispielsweise ist es möglich, den axialen Abstand (A) mit einem Magnetfeld von 50 Millitesla (mT) bis zu fünf Millimetern zu wählen und den radialen Abstand (B) bis zu einem Millimeter.

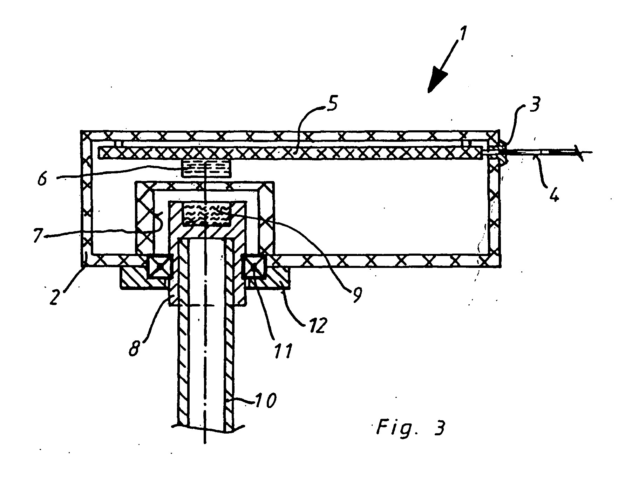

Fig. 3 zeigt den Positionsgeber (1). Gleiche Teile sind mit den in Fig. 1 verwendeten Bezugszahlen versehen. In der Ausnehmung (7) ist zusätzlich ein Kugellager (11) angeordnet, welches über eine Halteplatte (12) an dem Gehäuse befestigt ist. Durch die Anordnung des Kugellagers (11) lässt sich in dieser Ausführungsform des Positionsgebers (1) in einfacher Art und Weise auch eine GMR-Sensoreinheit (6) verwenden, da durch das Kugellager (11) die erforderlichen Toleranzen eingehalten werden.

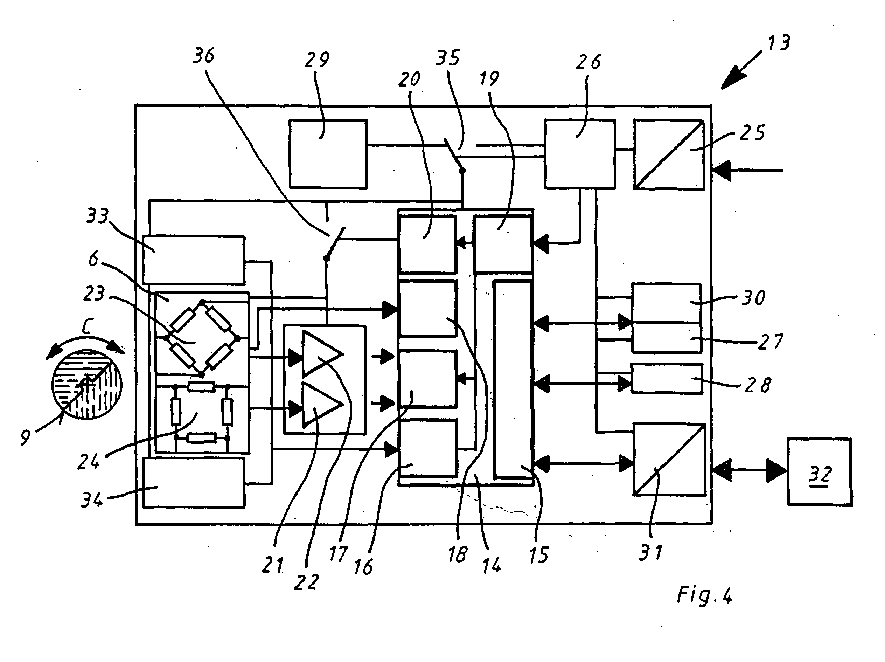

Fig. 4 zeigt ein Blockschaltbild der Elektronik. Die Elektronik (13) des Positionsgebers (1) weist einen hochintegrierten Mikrocontroller (14) auf, der wiederum die Bestandteile Low-Power-CPU (15), interrupt gesteuerte Weckvorrichtung (16), digitaler Zähleingang (17), hochauflösender ADC (18) mit integrierten Verstärkern und Offset-Bestimmung (Verstärker könnten auch außerhalb der CPU liegen), Power-Fail-Erkennung (19) für externe Versorgung und Schaltsignal (20) zur Aktivierung der Sensoreinheit (6) und von Komparatorstufen (21, 22) bei Batteriespeisung enthält.

Die Sensoreinheit (6) weist um 90° versetzte Messbrücken (23, 24) auf mit zwei Ausgangssignalen für Sinus und Kosinus. Vor den Messbrücken ist der diametral magnetisierte Magnet (9) angeordnet, der in Richtung des Doppelpfeiles (C) drehbar gelagert ist.

Die Elektronik (13) weist einen Versorgungseingang (25) auf für eine externe Versorgung, vorzugsweise zwischen 10 und 30 Volt mit entsprechenden Filterkomponenten.

Weiterhin ist eine Spannungsversorgung (26) vorgesehen, vorzugsweise von fünf Volt und eine Unterspannungserkennung der externen Versorgung, die ein Signal zur Umschaltung auf Batteriebetrieb erzeugt.

Ein Parameterspeicher (27) dient der Ablage von Inbetriebnahmestellungen und dergleichen. Der Parameterspeicher ist je nach Batteriekonzept jedoch nicht zwingend notwendig. Darüber hinaus ist ein Temperatursensor (28) vorgesehen zur Überwachung der Geberinnentemperatur, da zum Beispiel die Grenztemperatur der elektronischen Komponenten und insbesondere einer Lithium-Ionen-Batterie (29) nicht überschritten werden darf. Die Temperatur wird per Schnittstelle zur übergeordneten Steuerung übertragen. Diese kann dann zum Beispiel den Motor, sofern er für die Überhitzung verantwortlich ist, für eine Abkühlungsdauer stillsetzen. Zusätzlich ist eine Überwachungseinheit (30) zur Überwachung der Batteriespannung vorgesehen. Diese wird als Diagnosewert zur übergeordneten Steuerung übertragen. Dort wird sie ausgewertet und gibt dem Bediener eine Meldung, dass die Batterie schwach wird und ausgetauscht werden sollte.

Weiterhin ist eine Schnittstelle (31) zu der übergeordneten Steuerung (32) vorgesehen. Es kann sich hierbei um eine preiswerte serielle asynchrone Schnittstelle RS485 handeln.

Die Komparatoren (21, 22) sind zur Digitalisierung der Sinus- und Kosinus-Signale der entsprechenden AMR-Sensoren vorgesehen. Diese schalten jeweils beim Nulldurchgang der Signale. Die Komparatoren (21, 22) werden im Batteriebetrieb vom Mikrocontroller (14) geweckt beziehungsweise wird über den Mikrocontroller (14) die Versorgung zugeschaltet. Die AMR-Signale können zusätzlich über den ADC (18) des Mikrocontrollers (14) mit ausgewertet werden. Der ADC (18) benötigt jedoch zusätzlichen Strom und eine Initialisierungsphase, so dass sich die Lebensdauer der Batterie (29) verkürzt.

Die Elektronik (13) weist Reed-Kontakte (33, 34) auf mit hochohmigem Widerstand. Der erste Reed-Kontakt (33) ist für das Sinus-Signal und der zweite Reed-Kontakt (34) für das Kosinus-Signal vorgesehen. Die Reed-Kontakte (33, 34) generieren je nach mechanischer Stellung des Magneten (9) eine Schaltflanke, die wiederum den in Batteriebetrieb schlafenden Mikrocontroller (14) aufweckt und zum Zählen der störsicheren Komparatorsignale aktiviert. Das Schaltverhalten der Reed-Kontakte wird anhand der mechanischen Positionierung auf der Leiterplatte festgelegt. Hierbei spielt die Position (Anordnung) der Reed-Schalter (33, 34) zur Position des AMR-Sensors (6) eine wesentliche Rolle.

Zusätzlich ist ein Umschalter (35) vorgesehen zwischen der Batterieversorgung und der externen Versorgung (25). Die Ansteuerung der Umschaltung (35) kann entweder automatisch anhand der fehlenden externen Spannungsversorgung oder direkt vom Mikrocontroller (14) erfolgen.

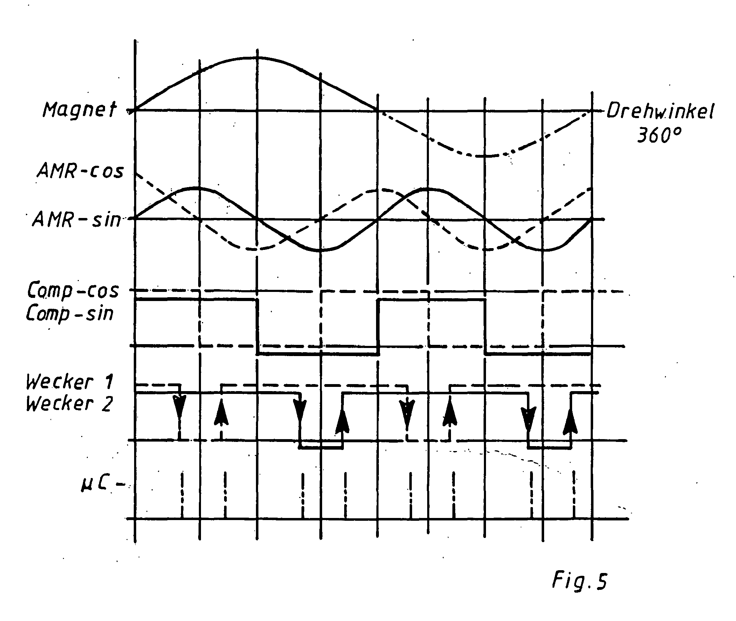

Darüber hinaus ist ein vom Mikrocontroller gesteuerter Schalter (36) vorgesehen für die Versorgung der AMR-Sensoren (6) und der Komparatoren (21, 22). Wie in Fig. 5 zu erkennen ist, dreht sich der Magnet (9) um 360°. Die beiden AMR-Sensoren in der Sensoreinheit (6) geben Spannungen aus, die über den gesamten Drehwinkel des Magneten (9) gesehen jeweils zweimal eine Sinus- beziehungsweise Kosinusform durchlaufen. Die Komparatoren (21, 22) werten die Spannungssignale digital aus. Diese Signale sind in Fig. 5 mit Comp-Kosinus und Comp-Sinus bezeichnet. Die Komparatoren (21, 22) schalten jeweils bei den Nulldurchgängen der Spannungen. Die Signale (Wecker 1, Wecker 2) werden von den Reed-Schaltern (33, 34) erzeugt. Diese sind mechanisch so angeordnet, dass sie circa 15° vor und nach den Nulldurchgängen der AMR-Signale schalten. Bei der Dimensionierung und Positionierung der Sensoren muss darauf geachtet werden, dass das Signalbild ungefähr dem in Fig. 5 dargestellten Ablauf entspricht. Der Mikrocontroller (14) wird während des Batteriebetriebes von jeder Schaltflanke der Reed-Schalter (33, 34) geweckt und kann dann anhand der Auswertung der Komparatorsignale entscheiden, ob es sich um eine Fehlauslösung handelt oder ob der Magnet (9) weitergedreht wurde. Hierbei spielt die Zeit zwischen den Flanken keine Rolle. Es können durchaus Stunden dazwischen liegen. Der Mikrocontroller (14) ist, sobald er aufgeweckt wurde, in der Lage, ein "sauberes" Signal der Komparatoren (21, 22) zu erfassen und kann dann anhand der Vorgeschichte der Signale entscheiden, ob er vorwärts oder rückwärts zählt. Wird der Mikrocontroller zum Beispiel durch Störimpulse auf den hochohmigen Reed-Signalen aufgeweckt, das heißt, ohne dass der Magnet tatsächlich weitergedreht worden wäre, so kontrolliert er lediglich die Komparatorsignale, ohne dass er weiterzählt.

Erkennt der Mikrocontroller (14) nach dem Aufwachen und den anschließenden Messzyklen, dass sich der Magnet nicht weiterdreht, so wechselt er selbstständig wieder in den Sleep-Modus und wartet auf den nächsten Impuls des Reed-Schalters (33, 34) als Weckimpuls. Diese Messzyklen können eine Mehrfachmessung wegen der Signalstabilität und Signalzuverlässigkeit enthalten.

Die erfindungsgemäße Vorrichtung arbeitet bei den unterschiedlichen Spannungsversorgungen folgendermaßen:
1. Solange externe Versorgung anliegt:
   - Analogwerte Sinus und Kosinus werden beispielweise mit 12 Bit erfasst;
   - Zähler zählt halbe Umdrehungen des Magneten 180°. Die Zählung erfolgt über die Erfassung der Nulldurchgänge und der Signale der Komparatoren (21, 22);
   - die komplette Schaltung ist immer unter Spannung;
   - die Batteriespannung und die Temperatur werden überwacht;
   - die Schnittstellen sind aktiv.
2. Stillstand ohne externe Versorgung:
   - die Batterie (29) ist aktiv;
   - der Mikrocontroller (14) ist im Sleep-Modus, der RAM-Inhalt bleibt gepuffert;
   - der AD-Wandler bleibt inaktiv (keine Singleturndaten);
   - die AMR-Messbrücken (23, 24) und Komparatoren (21, 22) sind inaktiv;
   - die Reed-Schalter (33, 34) sind hochohmig aber aktiv;
   - der Stromverbrauch liegt bei circa drei Mikroampere.
3. Bewegung ohne externe Versorgungsspannung:
   - der drehende Magnet (9) veranlasst die Reed-Schalter (33, 34) zum Schalten;
   - jede Schaltflanke weckt den Mikrocontroller (14);
   - der Mikrocontroller (14) aktiviert die Messbrücken (23, 24) und die Komparatoren (21, 22) für circa 100 Mikrosekunden;
   - innerhalb dieser Zeit erfolgt eine Zählerstandskontrolle;
   - bei 6000 Umdrehungen pro Minute erfolgt alle fünf Mikrosekunden ein 180°-Wechsel, daher wird jede Millisekunde für 100 Mikrosekunden der Zähler aktiv;
   - die Zählung erfolgt mit dynamischer Redundanzprüfung;
   - je nach vorangegangenen Ergebnissen schläft der Mikrocontroller (14) wieder ein;
   - der Stromverbrauch während des Aktivmodus beträgt circa 500 Mikroampere beziehungsweise bei Spitze circa 2,5 Milliampere.

Der Vorteil des erfindungsgemäßen Positionsgebers (1) liegt darin, dass eine sehr hohe Lebensdauer mit dem Positionsgeber erzielt wird.

### Bezugszahlen

- 1: Positionsgeber
- 2: Gehäuse
- 3: Leitungseinführung
- 4: Kabel
- 5: Platine
- 6: AMR-Sensoreinheit
- 7: Ausnehmung
- 8: Magnetträger
- 9: Magnet
- 10: Welle
- 11: Kugellager
- 12: Halteplatte
- 13: Elektronik
- 14: Mikrocontroller
- 15: CPU
- 16: Weckvorrichtung
- 17: digitaler Zähleingang
- 18: ADC
- 19: Power-Fail-Erkennung
- 20: Schaltsignal
- 21: Komparatorstufe
- 22: Komparatorstufe
- 23: Messbrücke
- 24: Messbrücke
- 25: Versorgungseingang
- 26: Spannungsversorgung
- 27: Parameterspeicher
- 28: Temperatursensor
- 29: Batterie
- 30: Überwachungseinheit
- 31: Schnittstelle
- 32: übergeordnete Steuerung
- 33: Reed-Kontakte
- 34: Reed-Kontakte
- 35: Umschalter
- 36: Schalter
- A: axialer Abstand
- B: radialer Abstand
- C: Doppelpfeil

## Patentansprüche

1. Positionsgeber zur Bestimmung einer Position einer drehbaren Welle mit einer AMR-Sensoreinheit oder einer GMR-Sensoreinheit, wobei die Sensoreinheit als zweigeteilter AMR-Sensor oder zweigeteilter GMR-Sensor ausgebildet ist oder die Sensoreinheit zwei AMR-Sensoren oder GMR-Sensoren aufweist, bei dem für die Positionserfassung lediglich ein auf einer zu überwachenden Welle (10) angeordneter Magnet (9) vorgesehen ist,
**dadurch gekennzeichnet, dass** der Positionsgeber (1) als Singleturn- und gleichzeitig als Multiturneinheit verwendbar ist, und dass die Positionsinformationen ausschließlich aus den Signalen der AMR-Sensoreinheit oder der GMR-Sensoreinheit abgeleitet werden, und dass ein lediglich während der Messzeiten aktivierter Mikrocontroller vorgesehen ist, und dass eine von dem Magneten (9) gesteuerte Weckvorrichtung (16) zum Aufwecken des Mikrocontrollers (14) vorgesehen ist, und dass die Weckvorrichtung (16) wenigstens einen vom Magnetfeld des Magneten (9) ausgelösten Signalgeber (33, 34) aufweist.

2. Positionsgeber nach Anspruch 1, **dadurch gekennzeichnet, dass** der der AMR-Sensoreinheit (6) zugeordnete Magnet (9) als diametral magnetisierter Magnet (9) ausgebildet ist, dass ein Mikrocontroller (14) und die Sensoreinheit (6), die einen zweigeteilten AMR-Sensor oder zwei AMR-Sensoren mit zwei Ausgangssignalen aufweist, zur Auswertung des Magnetfeldes des Magneten (9) vorgesehen sind.

3. Positionsgeber nach Anspruch 1, **dadurch gekennzeichnet, dass** der wenigstens eine Signalgeber (33, 34) als Reed-Schalter oder Hall-Element ausgebildet ist.

4. Positionsgeber nach einem der vorhergehenden Ansprüche, **dadurch gekennzeichnet, dass** wenigstens eine Batterie (29) oder wenigstens ein Akkumulator zur Versorgung des Mikrocontrollers (14) und der Weckvorrichtung (16) des Mikrocontrollers (14) vorgesehen ist.

5. Positionsgeber nach einem der vorhergehenden Ansprüche, **dadurch gekennzeichnet, dass** wenigstens ein Schwellwertschalter (21, 22) zur Digitalisierung der Sinus- und Kosinus-Signale der Sensoreinheit (6) vorgesehen ist.

6. Positionsgeber nach einem der vorhergehenden Ansprüche, **dadurch gekennzeichnet, dass** die wenigstens eine Batterie (29) oder der wenigstens eine Akkumulator als im Messmodus den Mikrocontroller (14), wenigstens zeitweise die Sensoreinheit (6), den wenigstens einen Schwellwertschalter (21, 22) und/oder die Weckvorrichtung (16) mit Spannung versorgende Batterie (29) oder Akkumulator ausgebildet ist.

7. Positionsgeber nach einem der vorhergehenden Ansprüche, **dadurch gekennzeichnet, dass** die Weckvorrichtung (16) als eine über hochohmige Widerstände von der Batterie (29) gespeiste Weckvorrichtung (16) ausgebildet ist.

8. Positionsgeber nach einem der vorhergehenden Ansprüche, **dadurch gekennzeichnet, dass** der Mikrocontroller (14) als ein Stromspareigenschaften aufweisender Mikrocontroller (14) ausgebildet ist.

9. Positionsgeber nach einem der vorhergehenden Ansprüche, **dadurch gekennzeichnet, dass** eine externe Spannungsversorgung (25) vorgesehen ist.

10. Positionsgeber nach einem der vorhergehenden Ansprüche, **dadurch gekennzeichnet, dass** wenigstens ein Parameterspeicher (27) vorgesehen ist.

11. Positionsgeber nach einem der vorhergehenden Ansprüche, **dadurch gekennzeichnet, dass** wenigstens ein Temperatursensor (28) vorgesehen ist.

12. Positionsgeber nach einem der vorhergehenden Ansprüche, **dadurch gekennzeichnet, dass** die Sensoreinheit (6) in einem geschlossenen Gehäuse (2) angeordnet ist, und dass der Sensoreinheit (6) gegenüberliegend außerhalb des Gehäuses (2) der Magnet (9) in oder an der zu überwachenden Welle (10) angeordnet ist.

13. Positionsgeber nach Anspruch 12, **dadurch gekennzeichnet, dass** ein Magnetträger (8) als ein auf der zu überwachenden Welle (10) adaptierbarer Magnetträger (8) ausgebildet ist.

14. Positionsgeber nach Anspruch 12 oder 13, **dadurch gekennzeichnet, dass** der Magnet (9) in dem die zu überwachende Welle (10) aufnehmenden Magnetträger (8) angeordnet ist.

15. Positionsgeber nach einem der Ansprüche 12 bis 14, **dadurch gekennzeichnet, dass** das Gehäuse (2) im Bereich der Sensoreinheit (6) eine den Magnetträger (8) wenigstens teilweise aufnehmende Ausnehmung (7) aufweist.

16. Positionsgeber nach einem der Ansprüche 12 bis 15, **dadurch gekennzeichnet, dass** die Ausnehmung (7) als eine den Magnetträger (8) mit Spiel aufnehmende Ausnehmung (7) ausgebildet ist.

17. Positionsgeber nach einem der Ansprüche 12 bis 16, **dadurch gekennzeichnet, dass** der Magnetträger (8) kontaktlos in der Ausnehmung (7) angeordnet ist.

18. Positionsgeber nach einem der Ansprüche 12 bis 14, **dadurch gekennzeichnet, dass** der Magnetträger (8) mittels wenigstens eines Kugellagers (11) in der Ausnehmung (7) gelagert ist.

19. Positionsgeber nach einem der Ansprüche 12 bis 18, **dadurch gekennzeichnet, dass** der Magnet (9) ein Magnetfeld von wenigstens 50 Millitesla (mT) aufweist.

20. Positionsgeber nach einem der Ansprüche 12 bis 19, **dadurch gekennzeichnet, dass** das Gehäuse (2) aus Kunststoff oder einem nicht ferromagnetischen Material gebildet ist.

21. Positionsgeber nach einem der Ansprüche 12 bis 20, **dadurch gekennzeichnet, dass** in dem Gehäuse (2) wenigstens ein Abschirmblech gegen magnetische Störfelder vorgesehen ist.

22. Positionsgeber nach einem der Ansprüche 12 bis 21, **dadurch gekennzeichnet, dass** das Gehäuse (2) wenigstens einen abnehmbaren Gehäusedeckel aufweist.

23. Positionsgeber nach einem der vorhergehenden Ansprüche, **dadurch gekennzeichnet, dass** der Positionsgeber (1) als ein in einer Torsteuerung verwendeter Positionsgeber (1) ausgebildet ist.

24. Verfahren zur Bestimmung einer Position einer drehbaren Welle mit einem Positionsgeber gemäß Anspruch 1, **dadurch gekennzeichnet, dass** mit einem diametral magnetisierten Magneten (9) in einem zweigeteilten AMR-Sensor (6) oder in zwei AMR-Sensoren Signale erzeugt werden, derart, dass als Ausgangssignale der AMR-Sensorseinheit (6) Sinus- und Kosinus-Signale erhalten werden, dass die Sinus- und Kosinus-Signale digitalisiert werden, und dass diese Signale von einem Mikrocontroller (14) bezüglich der Erfassung und Auswertung des Drehwinkels, zur Erfassung, Filterung und Auswertung der Anzahl der Umdrehungen, zur Erkennung der Drehrichtung und/oder zur Datenübertragung des Drehwinkels und der Anzahl der Umdrehungen an eine übergeordnete Steuerung verarbeitet werden.

25. Verfahren nach Anspruch 24, **dadurch gekennzeichnet, dass** die Schwellwertschalter (21, 22) jeweils bei den Nulldurchgängen der Spannungen schalten.

26. Verfahren nach Anspruch 24 oder 25, **dadurch gekennzeichnet, dass** über den wenigstens einen von der zu überwachenden Welle (10) ausgelösten Signalschalter (16) der Mikrocontroller (14) geweckt wird.

27. Verfahren nach einem der Ansprüche 24 bis 26, **dadurch gekennzeichnet, dass** der Mikrocontroller (14) nach Auswertung der Signale selbsttätig in einen Sleep-Modus wechselt.

28. Verfahren nach einem der Ansprüche 24 bis 27, **dadurch gekennzeichnet, dass** der Mikrocontroller (14) nach dem Aufwecken die AMR-Sensoreinheit (6) und den wenigstens einen Schwellwertschalter (21, 22) aktiviert.

29. Verfahren nach einem der Ansprüche 24 bis 28, **dadurch gekennzeichnet, dass** die Positionsinformationen ausschließlich aus den Signalen der AMR-Sensoreinheit (6) abgeleitet werden.

30. Verfahren nach einem der Ansprüche 24 bis 29, **dadurch gekennzeichnet, dass** die Anzahl der Umdrehungen anhand der Nulldurchgänge des Sinus- und des Kosinus-Signales der AMR-Sensoreinheit (6) ermittelt wird.

## Claims

1. A position encoder for determining a position of a rotatable shaft, having an AMR sensor unit or having a GMR sensor unit, the sensor unit being in the form of a split AMR sensor or split GMR sensor, or the sensor unit having two AMR sensors or GMR sensors, in which encoder there is provided, for position sensing, only one magnet (9) arranged on a shaft (10) that is to be monitored, **characterised in that** the position encoder (1) can be used as a single-turn unit and simultaneously as a multi-turn unit, and **in that** the position information is derived exclusively from the signals of the AMR sensor unit or of the GMR sensor unit, and **in that** there is provided a microcontroller (14) which is activated only during the measuring periods, and **in that** a wake-up device (16) controlled by the magnet (9) is provided for waking up the microcontroller (14), and **in that** the wake-up device (16) has at least one signal transmitter (33, 34) actuated by the magnetic field of the magnet (9).

2. A position encoder according to claim 1, **characterised in that** the magnet (9) associated with the AMR sensor unit (6) is in the form of a diametrically magnetised magnet (9), and **in that** a microcontroller (14) and the sensor unit (6), which has a split AMR sensor or two AMR sensors with two output signals, are provided for evaluating the magnetic field of the magnet (9).

3. A position encoder according to claim 1, **characterised in that** the at least one signal transmitter (33, 34) is in the form of a reed switch or Hall-effect element.

4. A position encoder according to any one of the preceding claims, **characterised in that** at least one battery (29) or at least one accumulator is provided for supplying power to the microcontroller (14) and to the wake-up device (16) of the microcontroller (14).

5. A position encoder according to any one of the preceding claims, **characterised in that** at least one threshold switch (21, 22) is provided for digitising the sine and cosine signals of the sensor unit (6).

6. A position encoder according to any one of the preceding claims, **characterised in that** the at least one battery (29) or the at least one accumulator is in the form of a battery (29) or accumulator which, in measurement mode, supplies voltage to the microcontroller (14), at least intermittently to the sensor unit (6), to the at least one threshold switch (21, 22), and/or to the wake-up device (16).

7. A position encoder according to any one of the preceding claims, **characterised in that** the wake-up device (16) is in the form of a wake-up device (16) which is fed by the battery (29) via high-ohmic resistors.

8. A position encoder according to any one of the preceding claims, **characterised in that** the microcontroller (14) is in the form of a microcontroller (14) having energy-saving characteristics.

9. A position encoder according to any one of the preceding claims, **characterised in that** an external voltage supply (25) is provided.

10. A position encoder according to any one of the preceding claims, **characterised in that** at least one parameter storage area (27) is provided.

11. A position encoder according to any one of the preceding claims, **characterised in that** at least one temperature sensor (28) is provided.

12. A position encoder according to any one of the preceding claims, **characterised in that** the sensor unit (6) is arranged in a sealed housing (2), and **in that**, opposite the sensor unit (6) outside the housing (2), the magnet (9) is arranged in or on the shaft (10) that is to be monitored.

13. A position encoder according to claim 12, **characterised in that** a magnet holder (8) is in the form of a magnet holder (8) which can be adjusted on the shaft (10) that is to be monitored.

14. A position encoder according to claim 12 or claim 13, **characterised in that** the magnet (9) is arranged in the magnet holder (8) accommodating the shaft (10) that is to be monitored.

15. A position encoder according to any one of claims 12 to 14, **characterised in that** the housing (2) has, in the region of the sensor unit (6), a recess (7) which accommodates the magnet holder (8) at least in part.

16. A position encoder according to any one of claims 12 to 15, **characterised in that** the recess (7) is in the form of a recess (7) which accommodates the magnet holder (8) with play.

17. A position encoder according to any one of claims 12 to 16, **characterised in that** the magnet holder (8) is arranged in a non-contacting manner in the recess (7).

18. A position encoder according to any one of claims 12 to 14, **characterised in that** the magnet holder (8) is supported in the recess (7) by means of at least one ball bearing (11).

19. A position encoder according to any one of claims 12 to 18, **characterised in that** the magnet (9) has a magnetic field of at least 50 millitesla (mT).

20. A position encoder according to any one of claims 12 to 19, **characterised in that** the housing (2) is made from plastics or from a non-ferromagnetic material.

21. A position encoder according to any one of claims 12 to 20, **characterised in that** there is provided in the housing (2) at least one shielding plate against magnetic interference fields.

22. A position encoder according to any one of claims 12 to 21, **characterised in that** the housing (2) has at least one detachable housing lid.

23. A position encoder according to any one of the preceding claims, **characterised in that** the position encoder (1) is in the form of a position encoder (1) used in a gate control.

24. A method for determining a position of a rotatable shaft with a position encoder as claimed in claim 1, **characterised in that**, with a diametrically magnetised magnet (9), signals are generated in a split AMR sensor (6) or in two AMR sensors such that sine and cosine signals are obtained as output signals of the AMR sensor unit (6), **in that** the sine and cosine signals are digitised, and **in that** these signals are processed by a microcontroller (14) relative to the sensing and evaluation of the angle of rotation, for sensing, filtering and evaluating the number of revolutions, for detecting the direction of rotation, and/or for data transmission of the angle of rotation and of the number of revolutions to a primary control unit.

25. A method according to claim 24, **characterised in that** the threshold switches (21, 22) operate at the zero voltage crossings.

26. A method according to claim 24 or claim 25, **characterised in that** the microcontroller (14) is woken up via the at least one signal switch (16) actuated by the shaft (10) that is to be monitored.

27. A method according to any one of claims 24 to 26, **characterised in that** the microcontroller (14) automatically changes to sleep mode following evaluation of the signals.

28. A method according to any one of claims 24 to 27, **characterised in that**, after being woken up, the microcontroller (14) activates the AMR sensor unit (6) and the at least one threshold switch (21, 22).

29. A method according to any one of claims 24 to 28, **characterised in that** the position information is derived exclusively from the signals of the AMR sensor unit (6).

30. A method according to any one of claims 24 to 29, **characterised in that** the number of revolutions is established on the basis of the zero crossings of the sine and cosine signal of the AMR sensor unit (6).

## Revendications

1. Détecteur de position pour déterminer une position d'un arbre rotatif avec un bloc détecteur AMR (à magnétorésistance anisotorpe) ou un bloc détecteur GMR (à magnétorésistance géante), et où le bloc détecteur est conçu sous la forme d'un capteur AMR en deux parties ou d'un capteur GMR en deux parties ou le bloc détecteur présente deux capteurs AMR ou deux capteurs GMR, dans lequel il est prévu, pour la détermination de la position, uniquement un aimant (9) disposé sur un arbre (10) à surveiller,
**caractérisé en ce que** le détecteur de position (1) peut être employé en tant qu'unité monotour et en même temps en tant qu'unité multitour, et **en ce que** les informations de position sont déduites exclusivement des signaux du bloc détecteur AMR ou du bloc détecteur GMR, et **en ce qu'**il est prévu un microcontrôleur uniquement activé pendant les temps de mesure, et **en ce qu'**il est prévu un dispositif de réveil (16) commandé par l'aimant (9) pour réveiller le microcontrôleur (14), et **en ce que** le dispositif de réveil (16) présente au moins un élément de fourniture de signaux (33, 34) déclenché par le champ magnétique de l'aimant (9).

2. Détecteur de position selon la revendication 1, **caractérisé en ce que** l'aimant (9) associé au bloc détecteur AMR (6) est conçu sous la forme d'un aimant (9) diamétralement magnétisé, **en ce que** sont prévus pour évaluer le champ magnétique de l'aimant (9) un microcontrôleur (14) et le bloc détecteur (6) qui présente un capteur AMR en deux parties ou deux capteurs AMR avec deux signaux de sortie.

3. Détecteur de position selon la revendication 1, **caractérisé en ce que** le au moins un élément de fourniture de signaux (33, 34) est conçu sous la forme d'un interrupteur en ampoule ou d'un élément à effet Hall.

4. Détecteur de position selon l'une quelconque des revendications précédentes, **caractérisé en ce qu'**il est prévu au moins une pile (29) ou au moins un accumulateur destiné à l'alimentation du microcontrôleur (14) et du dispositif de réveil (16) du microcontrôleur (14).

5. Détecteur de position selon l'une quelconque des revendications précédentes, **caractérisé en ce qu'**il est prévu au moins un commutateur de valeur de seuil (21, 22) destiné à numériser des signaux sinus et cosinus du bloc détecteur (6).

6. Détecteur de position selon l'une quelconque des revendications précédentes, **caractérisé en ce que** la au moins une pile (29) ou le au moins un accumulateur est conçue/conçu sous la forme d'une pile (29) ou d'un accumulateur d'alimentation en tension au cours du mode de mesure le microcontrôleur (14), au moins temporairement le bloc détecteur (6), le au moins un commutateur de valeur de seuil (21, 22) et/ou le dispositif de réveil (16).

7. Détecteur de position selon l'une quelconque des revendications précédentes, **caractérisé en ce que** le dispositif de réveil (16) est conçu sous la forme d'un dispositif de réveil (16) alimenté par la pile (29) à travers des résistances de valeur ohmique élevée.

8. Détecteur de position selon l'une quelconque des revendications précédentes, **caractérisé en ce que** le microcontrôleur (14) est conçu sous la forme d'un microcontrôleur (14) présentant des propriétés de faible consommation de courant.

9. Détecteur de position selon l'une quelconque des revendications précédentes, **caractérisé en ce qu'**il est prévu une alimentation en courant externe (25).

10. Détecteur de position selon l'une quelconque des revendications précédentes, **caractérisé en ce qu'**il est prévu au moins une mémoire de paramètres (27).

11. Détecteur de position selon l'une quelconque des revendications précédentes, **caractérisé en ce qu'**il est prévu au moins une sonde de température (28).

12. Détecteur de position selon l'une quelconque des revendications précédentes, **caractérisé en ce que** le bloc détecteur (6) est disposé dans un boîtier fermé (2), et **en ce que** l'aimant (9) est disposé dans ou sur l'arbre à surveiller (10) à l'opposé du bloc détecteur (6) à l'extérieur du boîtier (2).

13. Détecteur de position selon la revendication 12, **caractérisé en ce qu'**un support d'aimant (8) est conçu sous forme d'un support d'aimant (8) adaptable sur l'arbre à surveiller (10).

14. Détecteur de position selon la revendication 12 ou 13, **caractérisé en ce que** l'aimant (9) est disposé dans le support d'aimant (8) recevant l'arbre à surveiller (10).

15. Détecteur de position selon l'une des revendications 12 à 14, **caractérisé en ce que** le boîtier (2) présente, dans la zone du détecteur (6), un creux (7) recevant au moins partiellement le support d'aimant (8).

16. Détecteur de position selon l'une des revendications 12 à 15, **caractérisé en ce que** le creux (7) est conçu sous forme d'un creux (7) recevant avec un jeu le support d'aimant (8).

17. Détecteur de position selon l'une des revendications 12 à 16, **caractérisé en ce que** le support d'aimant (8) est disposé sans contact dans le creux (7).

18. Détecteur de position selon l'une des revendications 12 à 14, **caractérisé en ce que** le support d'aimant (8) est logé dans le creux (7) au moyen d'au moins un roulement à billes (11).

19. Détecteur de position selon l'une des revendications 12 à 18, **caractérisé en ce que** l'aimant (9) présente un champ magnétique d'au moins 50 milliTesla (mT).

20. Détecteur de position selon l'une des revendications 12 à 19, **caractérisé en ce que** le boîtier (2) est formé en matière synthétique ou en matériau non ferromagnétique.

21. Détecteur de position selon l'une des revendications 12 à 20, **caractérisé en ce qu'**il est prévu dans le boîtier (2) au moins une tôle de protection contre des champs parasites magnétiques.

22. Détecteur de position selon l'une des revendications 12 à 21, **caractérisé en ce que** le boîtier (2) présente au moins un couvercle de boîtier amovible.

23. Détecteur de position selon l'une quelconque des revendications précédentes, **caractérisé en ce que** le détecteur de position (1) est conçu sous la forme d'un détecteur de position (1) employé dans une commande de porte.

24. Procédé pour déterminer une position d'un arbre rotatif avec un détecteur de position selon la revendication 1,
**caractérisé en ce que** des signaux sont engendrés avec un aimant (9) diamétralement magnétisé dans un capteur AMR (6) en deux parties ou dans deux capteurs AMR de manière telle que les signaux de sortie reçus du bloc détecteur AMR (6) soient des signaux sinus et cosinus, que les signaux sinus et cosinus soient numérisés, et que ces signaux soient traités par un microcontrôleur (14) en ce qui concerne la détermination et l'évaluation de l'angle de rotation, à des fins de détermination, filtrage et évaluation des tours, à des fins de détection du sens de rotation et/ou à des fins de transmission de données de l'angle de rotation et du nombre de tours à un dispositif de commande principal.

25. Procédé selon la revendication 24, **caractérisé en ce que** les commutateurs de valeur de seuil (21, 22) commutent à chaque fois lors des passages à zéro des tensions.

26. Procédé selon la revendication 24 ou 25, **caractérisé en ce que** le microcontrôleur (14) est réveillé par le biais du au moins un commutateur de signal (16) déclenché par l'arbre à surveiller (10).

27. Procédé selon l'une des revendications 24 bis 26, **caractérisé en ce que** le microcontrôleur (14) passe automatiquement dans un mode Veille après l'évaluation des signaux.

28. Procédé selon l'une des revendications 24 à 27, **caractérisé en ce que** le microcontrôleur (14) active, après le réveil, le bloc détecteur AMR (6) et le au moins un commutateur de valeur de seuil (21, 22).

29. Procédé selon l'une des revendications 24 à 28, **caractérisé en ce que** les informations de position sont déduites exclusivement des signaux du bloc détecteur AMR (6).

30. Procédé selon l'une des revendications 24 à 29, **caractérisé en ce que** le nombre de tours est déterminé à l'aide des passages à zéro des signaux sinus et cosinus du bloc détecteur AMR (6).
